Europäisches Patentamt

European Patent Office

Office européen des brevets

(11) Veröffentlichungsnummer: **0 459 212 A2**

# (12) EUROPÄISCHE PATENTANMELDUNG

(21) Anmeldenummer: **91107792.3**

(22) Anmeldetag: **14.05.91**

(51) Int. Cl.5: **G01N 25/64**

(30) Priorität: **01.06.90 DE 4017816**

(43) Veröffentlichungstag der Anmeldung:
**04.12.91 Patentblatt 91/49**

(84) Benannte Vertragsstaaten:
**AT BE CH DE DK ES FR GB GR IT LI LU NL SE**

(71) Anmelder: **ULTRAKUST electronic GmbH
Sudetenstrasse 5-7
W-8375 Ruhmannsfelden(DE)**

(72) Erfinder: **Böhm, Alfred
Waldfrieden 12
W-8374 Viechtach(DE)**

(74) Vertreter: **Heim, Hans-Karl, Dipl.-Ing. et al
c/o Weber & Heim Hofbrunnstrasse 36
W-8000 München 71(DE)**

(54) **Psychrometer.**

(57) Die Erfindung betrifft ein Psychrometer mit einem Trockentemperaturfühler und einem davon beabstandeten Feuchtetemperaturfühler, der mit einer Flüssigkeit benetzbar ist. Das Psychrometer ist in geringen Abmessungen herstellbar und erlaubt den Einsatz in einem großen Temperaturbereich, wenn der Feuchtetemperaturfühler an einem Träger angeordnet ist, der mittels eines Antriebs in eine Oszillationsbewegung versetzbar ist.

Fig.1

Die Erfindung betrifft ein Psychrometer mit einem Trockentemperaturfühler und einem davon beabstandeten Feuchtetemperaturfühler, der zur Erzeugung einer Relativbewegung zwischen Feuchtetemperaturfühler und Luft in Bewegung versetzbar ist.

Derartige Psychrometer werden zur Messung der Luftfeuchtigkeit verwendet. Das Meßverfahren arbeitet dabei wie folgt: Das Psychrometer besitzt einen Trockentemperaturfühler und einen Feuchtetemperaturfühler. Der Trockentemperaturfühler mißt in üblicher Weise die Temperatur der Luft. Der Feuchtetemperaturfühler kann wie in der DE 35 46 364 A1 von einem feuchten Strumpf umgeben sein oder mit einer Flüssigkeitsschicht überzogen sein, wodurch die gemessene Temperatur auch durch die Verdunstungskälte der verdunstenden Flüssigkeit beeinflußt wird. Die Verdunstungskälte ist wiederum abhängig von dem Feuchtigkeitsgehalt der Luftkammer, da eine nahezu feuchtigkeitsgesättigte Luft zu einer niedrigeren Verdunstungskälte führt als trockene Luft. Die Luft streicht dabei mit einer bestimmten Geschwindigkeit an der Meßelektrode des Feuchtetemperaturfühlers vorbei. Die von dem Feuchtetemperaturfühler gemessene Abkühlungstemperatur oder auch Feuchtetemperatur ist somit ein Maß für die in der Luft enthaltene Feuchtigkeit. Durch die Temperaturdifferenz zwischen Trockentemperatur und Feuchtetemperatur kann der Feuchtigkeitsgrad der Luft sehr exakt bestimmt werden. Die genaue Messung der Luftfeuchtigkeit ist vor allem deswegen so exakt möglich, weil die gemessenen Temperaturdifferenzen sehr hoch sind. Sie können z.B. im Bereich von 30 Grad C und mehr liegen.

Bei diesem bekannten psychrometrischen Meßverfahren der Luftfeuchtigkeit handelt es sich um reine Temperaturmessungen, die keinerlei Alterungs- oder Drifterscheinungen unterliegen. Dieses Meßverfahren arbeitet darüber hinaus völlig hysteresefrei.

Da die Luft an dem Feuchtetemperaturfühler immer mit einer bestimmten Geschwindigkeit vorbeistreichen muß, wird dieser entweder in einem Strömungskanal eingebaut, durch den die Luft mit einer bestimmten Geschwindigkeit hindurchstreicht oder der Feuchtetemperaturfühler wird Z.B. wie in der DE 35 46 364 A1, S.2, Zeilen 21 bis 24, angeführt, in eine Bewegung versetzt, so daß er selbst gegenüber der Luft bewegt wird. Beiden Systemen haftet der Nachteil an, daß der mechanische Aufbau der Meßapparatur relativ kompliziert ist. Weiterhin treten aufgrund des Einsatzes von Lüftermotoren oder von Antriebsmotoren für die Relativ- oder Rotationsbewegung relativ laute Betriebsgeräusche auf, die den Einsatzbereich des Psychrometers einschränken. Durch die komplizierten mechanischen Komponenten des Psychrometers ist auch der Einsatzbereich der bekannten Psychrometer auf einen relativ engen Temperaturbereich beschränkt.

Der Erfindung liegt die **Aufgabe** zugrunde, ein Psychrometer der gattungsgemäßen Art zu schaffen, das mit geringem technischen Aufwand die Messung der Luftfeuchtigkeit in einem großen Temperaturbereich erlaubt.

Diese Aufgabe wird bei einem Psychrometer der gattungsgemäßen Art durch die kennzeichnenden Merkmale des Anspruchs 1 gelöst. Vorteilhafte Weiterbildungen der Erfindung sind Gegenstand der Unteransprüche.

Der Feuchtetemperaturfühler wird erfindungsgemäß in eine oszillierende Bewegung versetzt. Die Erzeugung der Oszillationsbewegung ist z.B. durch das Anordnen des Feuchtetemperaturfühlers an dem freien Ende einer Schwinge oder einer Feder oder eines ähnlichen Trägers auf technisch einfache Weise zu realisieren, wobei die Oszillationsbewegung durch einen Mikromechanismus, z.B. einen Elektromagneten oder einen piezoelektrischen Antrieb, bewirkt wird. Diese Antriebe haben darüber hinaus den Vorteil, daß sie sich in einem breiten Temperaturbereich einsetzen lassen.

Da sich der Feuchtetemperaturfühler nicht wie bei den bekannten Schleuderpsychrometern mit Rotationsbewegung in dauernder Drehbewegung relativ zu dem festen Aufbau des Psychrometers befindet, läßt sich die Wasserzuführung zu dem Feuchtetemperaturfühler einfacher realisieren.

Die Oszillationsfeder kann in vorteilhafterweise wie folgt aufgebaut sein:

Das Trägermaterial auf der Feder besteht aus Keramik. Zumindest am freien Ende der Feder ist eine temperatursensitive Widerstandsschicht, vorzugsweise eine mäanderförmige Platinschicht, z.B. eine Pt-100, Pt-500- oder Pt-1000-Schicht, aufgebracht. Alternativ können hierfür auch andere Temperatursensoren wie Thermoelemente verwendet werden. Diese Widerstandsschicht wird mit einer vorzugsweise aus Glas bestehenden Passivierungsschicht überdeckt, auf die wiederum eine poröse Schicht, vorzugsweise aus Keramik, aufgebracht wird, die die Benetzung des Feuchtetemperaturfühlers mit Feuchtigkeit sicherstellen soll. Diese poröse Schicht ist z.B. über eine dünne Rohrleitung mit Feuchtigkeit benetzbar. Es kann Jedoch auch der gesamte Träger als Rohr ausgebildet sein. In diesem Fall wird die Flüssigkeit dem an der Außenwand des Rohres befindlichen Feuchtetemperaturfühler über den Innenraum des Rohres zugeführt. Vorteilhafterweise kann die Benetzungsflüssigkeit auch in Abhängigkeit von der Schwingung oder Oszillationsbewegung zugeführt werden. Dies ist insbesondere durch eine Peristaltik-Pumpe möglich, die z.B. über eine Membran mit dem Elektromagneten in Verbindung steht, der den Träger bzw. die Feder in Schwingung versetzt. Die Amplitude und die Auslenkung der Oszillationsbewegung wirkt sich damit in vorteilhafter Weise direkt auf die Pumpleistung und die Zufuhr der Benetzungsflüssigkeit aus.

Auf der porösen Schicht ist vorzugsweise ein Benetzungssensor aufgebracht, der die Feuchte der porösen Schicht ermittelt bzw. feststellt, inwieweit die gesamte Oberfläche der porösen Schicht tatsächlich benetzt ist und somit zur Überwachung der Flüssigkeitszufuhr eingesetzt werden kann. Die Feuchte der porösen Schicht wird vorzugsweise über eine Widerstands- oder Kapazitätsmessung der porösen Schicht ermittelt.

Wenn als Oszillationsantrieb für den oben genannten federartigen Träger ein Elektromagnet verwendet wird, erhält man einen Antrieb, der bis zu einem Temperaturbereich von 350° einsatzfähig ist. Dieser Elektromagnet kann neben dem als Federelement ausgebildeten Träger mit einem festen Teil des Psychrometers vergossen sein und kann mit einem an dem Federelement angebrachten Metallstück in Wechselwirkung treten.

Bei der Verwendung eines Piezoschwingers am unteren Ende des Federelements erhält man ebenfalls einen Oszillationsantrieb, der sich über einen weiten Temperaturbereich verwenden läßt. Wenn der Piezoschwinger groß genug dimensioniert ist, läßt sich der Feuchtetemperaturfühler auch direkt auf den Piezoschwinger aufbringen.

Der Trockentemperaturfühler kann in dem Psychrometer in einer separaten Kammer angeordnet sein, um eine Beeinflussung des Trockentemperaturfühlers durch die dem Feuchtetemperaturfühler zugeführte Flüssigkeit bzw. die abgekühlte, bewegte Luft zu verhindern.

Die Erfindung wird nachfolgend beispielsweise anhand der schematischen Zeichnung beschrieben. In dieser zeigen:

Fig. 1 einen Längsschnitt durch einen oszillierenden Feuchtetemperaturfühler eines Psychrometers,

Fig. 2 ein Blockschaltbild einer Auswertungs- und Steuerschaltung für den Feuchtetemperaturfühler aus Fig. 1 und

Fig. 3 eine Draufsicht auf den Feuchtetemperaturfühler nach Fig. 1 mit mäander- bzw. fächerförmiger Widerstandsschicht als Elektrode.

Der Feuchtetemperaturfühler 10 besteht aus einem länglichen Federblechstreifen , dessen eines Längsende in einer Halterung 14 gehalten ist. Auf das andere Längsende ist ein keramisches Trägermaterial 16 aufgebracht, auf das die Pt-100-Elektrode 18 des Feuchtetemperaturfühlers 10 angeordnet ist. Die Pt-100-Elektrode 18 ist von einer Passivierungsschicht 20 überdeckt, um eine lange Lebensdauer der Pt-100-Elektrode zu gewährleisten. Auf der Passivierungsschicht 20 ist eine poröse Schicht 22, z.B. aus Keramik, angeordnet. Diese poröse Schicht 22 wird mittels einer nicht dargestellten Wasserzuführung mit Wasser benetzt, das sich durch die Kapillarwirkung der porösen Schicht 22 gleichmäßig in dieser verteilt. In der porösen Schicht 22 oder auf dieser ist eine mäanderförmige Meßelektrode 24 aufgebracht, die auf kapazitive Art oder aufgrund einer Widerstandsmessung die Messung der Feuchtigkeit in der porösen Schicht erlaubt. 34 deutet eine Klebeschicht für die Aufbringung der Meßelektrode 24 an, während 32 die Feuchtigkeitsbenetzung darstellt.

Das der Halterung 14 abgewandte freie Ende der Feder 12 mit der Elektrode 18 des Feuchtetemperaturfühlers 10 ist durch die Elastizität des Federblechstreifens 12 quer zu dessen Ebene beweglich. An dem Federblechstreifen 12 ist ein ferromagnetisches Stellelement 25 befestigt. Dieses wirkt mit einem Elektromagneten 26 zusammen, wobei das Stellelement 25 in axialer Verlängerung des Magnetkerns 28 des Elektromagneten 26 angeordnet ist. Der Elektromagnet 26 wird mit einem Wechselstrom einstellbarer Frequenz beaufschlagt, wodurch der Feuchtetemperaturfühler 10 gemäß der Richtung des Doppelpfeils A in eine Schwingung versetzt wird, deren Frequenz von der Frequenz des Wechselstroms abhängt. Die Amplitude der Schwingung des Feuchtetemperaturfühlers 10 läßt sich durch die Amplitude des Wechselstroms regeln, der dem Elektromagneten 26 zugeführt wird.

Durch die Oszillationsbewegung des Feuchtetemperaturfühlers 10 streicht die zu messende Luft an der mit der Flüssigkeit benetzten porösen Schicht 22 vorbei, auf der sie eine Verdunstung der Feuchtigkeit bewirkt. Diese Verdunstung führt aufgrund der Verdunstungskälte zu einer Abkühlung, die mit der Pt-100-Meßelektrode 18 gemessen wird. Die Verdunstungskälte ist abhängig von der Temperatur und der Luftfeuchtigkeit der zu messenden Luft. Gleichzeitig wird mit einem anderen Trockentemperaturfühler die Trockentemperatur der zu messenden Luft gemessen. Durch Subtraktion der beiden Werte voneinander erhält man die Verdunstungskälte, die aufgrund der Kenntnis der Lufttemperatur eine direkte Berechnung der Luftfeuchtigkeit zuläßt. Zwischen der Pt-100-Meßelektrode 18 und der mäanderförmigen Elektrode 24 wird auf kapazitive Weise die Feuchtigkeit der porösen Schicht 22 gemessen und in nachfolgend noch näher beschriebener Weise zur Steuerung der Wasserzuführung verwendet.

Der Trockentemperaturfühler zur Messung der Trockentemperatur kann entweder auf der Rückseite des Federblechstreifens oder in einer separaten Kammer des Psychrometers angeordnet sein.

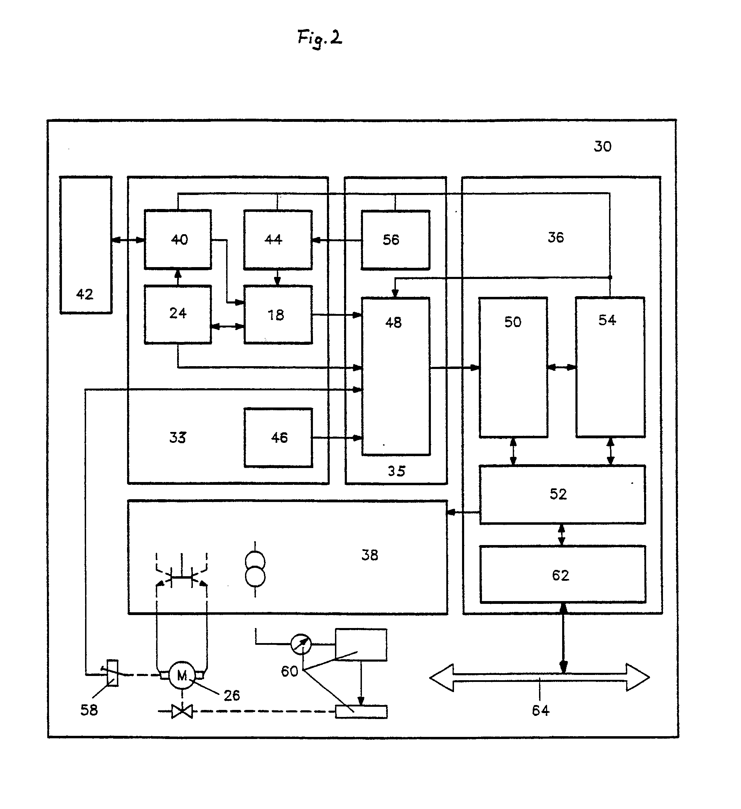

In Fig. 2 wird schematisch ein Schaltungsaufbau für die Steuerungs- und Auswerteschaltung 30 des Psychrometers beschrieben.

Die Steuerungs- und Auswerteschaltung 30 besteht aus vier funktionsmäßig miteinander verbundenen Teilen: Der Mikrosensorik 33, dem Analogteil 35, dem Digitalteil 36 und dem Funktionsteil 38.

Die Mikrosensorik 33 umfaßt die Meßelektrode 18 des Feuchtetemperaturfühlers 10, die Elektrode 24 zur Überwachung der Feuchtigkeit auf der porösen Schicht 22, eine Mikromechanik 40 zur Steuerung der Wasserversorgung 42, um eine konstante Feuchtigkeit in der porösen Schicht 22 sicherzustellen und eine Mikromechanik 44 zur Beeinflussung der Meßelektrode 18 des Feuchtetemperaturfühlers 10. Die Mikrosensorik 33 weist ferner einen Trockentemperaturfühler 46 auf, der zur Ermittlung der Trockentemperatur der Luft verwendet wird. Die gemessenen Werte werden in dem Analogteil 35 einem integrierten Schaltkreis 48 zugeführt, der als Multiplexer und Analog/ Digitalwandler dient. Die digitalisierten Daten werden in den Digitalteil 36 überführt, wo sie in einem Rechenlogikbauteil 50 ausgewertet werden. Dieses Rechenlogikbauteil 50 ist mit einem Mikroprozessor 52 und einer Steuerelektronik 54 verbunden. Aus den in dem Rechenlogikbauteil errechneten Daten werden in der Steuerelektronik 54 Steuersignale generiert, die wiederum einem im Analogteil 35 befindlichen Regler 56 zur Betätigung der Mikromechanik 44 zugeführt werden. Von dem im Digitalteil 36 befindlichen Mikroprozessor 52 führt ein Ausgang zum Funktionsteil 38.

Der Funktionsteil 38 dient der Beeinflussung des gemessenen bzw. zu messenden Mediums. Hierzu kann man über Stellglieder 60 und 26 (Motor) durch die Zufuhr von Dampf oder Trockenenergie die Prozeßluft auf den gewünschten Sollwert regeln. Ein Potentiometer 58 kann dabei als Stellgrad-Rückmelder für die Prozeßüberwachung mit seinem Ausgang auf den Schaltkreis 48 zurückgeführt sein.

Der Mikroprozessor 52 im Digitalteil 36 ist mit einer Busankopplung 62 verbunden, die an ein Feldbussystem 64, z.B. des Typs p-net, angeschlossen ist. So kann das Psychrometer zusammen mit anderen Meßapparaturen von einer nicht dargestellten zentralen Steuereinheit im Feldbussystem angesteuert und fernbedient werden, wobei von der Steuereinheit sowohl eine Meßwerterfassung als auch die Einstellung neuer Parameter möglich ist.

Durch die Ausbildung des Feuchtetemperaturfühlers in Mehrlagentechnologie mit der porösen Keramik wird eine leicht zu reinigende und austauschbare Verdunstungsfläche geschaffen.

Die Belüftung der porösen Keramik kann durch ein lamellenförmiges Profil verstärkt werden.

Die poröse Keramik wird vorzugsweise mit Wasser benetzt, wobei die Wasserfördermenge von der Luftfeuchtigkeit und der Feuchte in der porösen Schicht 22 eingestellt wird.

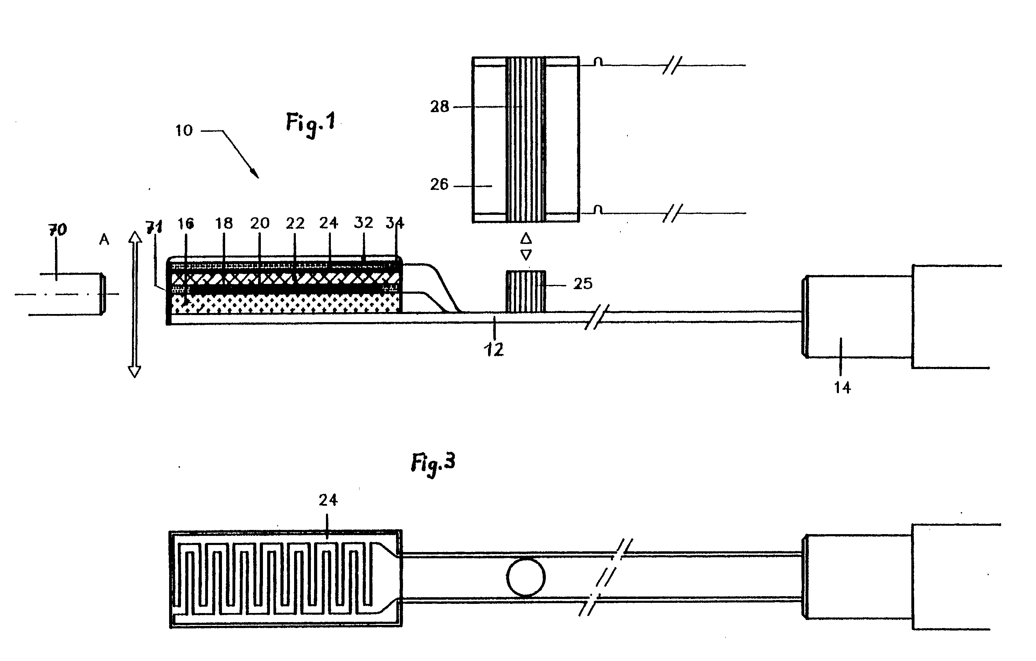

In Fig. 3 ist in schematischer Weise eine Draufsicht auf den Feuchtetemperaturfühler 10 nach Fig. 1 dargestellt. Die Draufsicht zeigt deutlich die Anordnung der Meßelektrode 24 in Mäander- oder Fächerform, womit über eine entsprechende Widerstandsmessung die Benetzungsfläche des Feuchtetemperaturfühlers 10 mit Flüssigkeit überwacht werden kann.

Zur Überwachung der Oszillation des Feuchtetemperaturfühlers 10 kann wie in der Fig. 1 im Abstand zur Stirnseite des Fühlers angedeutet, eine Überwachungseinrichtung 70 z.B. als induktiver oder kapazitiver Näherungsschalter oder auch als optische Überwachungseinrichtung vorgesehen sein. Diese Überwachungseinrichtung kontrolliert daher über entsprechende Ausgangssignale die Schwingung des Feuchtetemperaturfühlers 10. Bei einem Näherungsschalter ist hierfür zweckmäßigerweise an der Stirnseite des Feuchtetemperaturfühlers 10 eine Metallschicht 71 angebracht. Die Überwachungseinrichtung 70 kann alternativ auch mit Abstand gegenüber der unteren Seite des Feuchtetemperaturfühlers 10 vorgesehen sein, wobei dann beispielsweise eine Metallbeschichtung entfallen könnte.

Um auch geringfügige Temperaturänderungen im entsprechenden Gehäuse des Feuchtetemperaturfühlers 10 nach Möglichkeit zu vermeiden, wird der Meßinnenraum zweckmäßigerweise verspiegelt, um eine weitgehende Reflektion von Temperaturstrahlungen zu erreichen.

Selbstverständlich kann das beschriebene Psychrometer auch für andere Flüssigkeiten als Wasser eingesetzt werden, so daß ein breites Einsatzspektrum auch für chemische Prozesse gegeben ist.

## Patentansprüche

1. Psychrometer mit einem Trockentemperaturfühler und einem davon beabstandeten Feuchtetemperaturfühler, der zur Erzeugung einer Relativbewegung zwischen Feuchtetemperaturfühler und Luft in Bewegung versetzbar ist, wobei der Feuchtetemperaturfühler (10) mit einer Flüssigkeit benetzbar ist und an einem Träger (12,16) angeordnet ist, der mittels eines Antriebs (25,26) in eine Oszillationsbewegung versetzbar ist.

2. Psychrometer nach Anspruch 1, dadurch **gekennzeichnet,** daß der Träger (12) als elastisches Federelement ausgebildet ist und daß der Feuchtetemperaturfühler (10) an dem freien Ende des Federelements (12) angeordnet ist.

3. Psychrometer nach Anspruch 2,
dadurch **gekennzeichnet**,
daß das Federelement (12) als Federblechstreifen ausgebildet ist.

4. Psychrometer nach einem der vorhergehenden
Ansprüche,
dadurch **gekennzeichnet**,
daß der Antrieb (25,26) mindestens einen Elektromagneten (26) aufweist.

5. Psychrometer nach einem der Ansprüche 1 bis
3,
dadurch **gekennzeichnet**,
daß der Antrieb als piezoelektrischer Antrieb
ausgebildet ist.

6. Psychrometer nach einem der vorhergehenden
Ansprüche,
dadurch **gekennzeichnet**,
daß die Amplitude der Oszillationsbewegung
einstellbar und steuerbar ist.

7. Psychrometer nach Anspruch 6,
dadurch **gekennzeichnet**,
daß die Steuerung der Oszillationsbewegung in
Abhängigkeit von der ermittelten Luftfeuchtigkeit erfolgt.

8. Psychrometer nach einem der vorhergehenden
Ansprüche,
dadurch **gekennzeichnet**,
daß der Feuchtetemperaturfühler (10) eine flächige Widerstands-Metallelektrode (18) aufweist.

9. Psychrometer nach Anspruch 8,
dadurch **gekennzeichnet**,
daß die Widerstands-Metallelektrode (18) aus
einem Pt-100-Material, insbesondere einer
Platinschicht, oder einer anderen temperatursensitiven Widerstandsschicht besteht oder als
Temperatursensor ausgelegt ist.

10. Psychrometer nach Anspruch 8 oder 9,
dadurch **gekennzeichnet**,
daß die Widerstands-Metallelektrode (18) mit
einer Passivierungsschicht (20) versehen ist.

11. Psychrometer nach einem der Ansprüche 8 bis
10,
dadurch **gekennzeichnet**,
daß zumindest an einer Seite der Widerstands-
Metallelektrode (18) oder auf der Passivierungsschicht (20) eine poröse Schicht (22) angeordnet ist, die von einer Feuchtigkeitsquelle feucht gehalten ist.

12. Psychrometer nach Anspruch 11,
dadurch **gekennzeichnet**,
daß die poröse Schicht (22) aus einem Keramikmaterial oder aus Vliesmaterial aufgebaut
ist.

13. Psychrometer nach Anspruch 11 oder 12,
dadurch **gekennzeichnet**,
daß auf die poröse Keramik eine Elektrode
(24) zur Ermittlung der Feuchtigkeit der porösen Schicht (22) aufgebracht ist.

14. Psychrometer nach Anspruch 13,
dadurch **gekennzeichnet**,
daß eine Steuerungs- und Auswerteschaltung
(30) vorgesehen ist, in der die Feuchte in der
porösen Schicht (22) durch eine Widerstands-
oder Kapazitätsmessung an der Elektrode (24)
zur Feuchtebestimmung ermittelbar ist.

15. Psychrometer nach Anspruch 13 oder 14,
dadurch **gekennzeichnet**,
daß die Elektrode (24) zur Ermittlung der
Feuchte in der porösen Schicht (22) mäander-
oder fächerförmig ausgebildet ist.

16. Psychrometer nach einem der Ansprüche 13
bis 15,
dadurch **gekennzeichnet**,
daß eine regelbare Feuchtigkeitsversorgung
(40,42) für die poröse Schicht (22) vorgesehen
ist.

17. Psychrometer nach einem der vorhergehenden
Ansprüche,
dadurch **gekennzeichnet**,
daß ein Trockentemperaturfühler (46) in einem
von dem Feuchtetemperaturfühler (10) separierten Raum des Psychrometers angeordnet
ist.

18. Psychrometer nach einem der vorhergehenden
Ansprüche,
dadurch **gekennzeichnet,**
daß eine Steuerungs- und Auswerteschaltung
vorgesehen ist, in der die Meßwerte digitalisiert
und in digitalisierter Form ausgewertet werden.

19. Psychrometer nach Anspruch 17,
dadurch **gekennzeichnet**,
daß die Steuerungs- und Auswerteschaltung
(30) einen programmierbaren Mikroprozessor
(52) aufweist, der über eine Busankopplung
(62) an ein Feldbussystem (64), z.B. des Typs
p-net, anschließbar ist.

**20.** Psychrometer nach Anspruch 18,
dadurch **gekennzeichnet**,
daß die Betriebsfunktionen des Psychrometers über das Feldbussystem (64) von einer Zentraleinheit aus steuerbar sind.

Fig.1

Fig.3

Fig. 2